# EUROPÄISCHE PATENTSCHRIFT

(11) **EP 1 329 085 B1**
(45) Veröffentlichungstag und Bekanntmachung des Hinweises auf die Patenterteilung: **24.02.2010**
(21) Anmeldenummer: 01980176.0
(22) Anmeldetag: 19.09.2001
(51) Int. Cl.: H04M 1/02, H01Q 1/24

(54) **KOMMUNIKATIONSENDGERÄT**
COMMUNICATIONS TERMINAL
TERMINAL DE COMMUNICATION

(30) Priorität: 25.10.2000 DE 10052909
(43) Veröffentlichungstag der Anmeldung: 23.07.2003
(73) Patentinhaber: Palm, Inc., Sunnyvale, CA 94085-2801 (US)
(72) Erfinder: NEVERMANN, Peter, San Diego, CA 92129 (US)
(74) Vertreter: Samson & Partner
(86) Internationale Anmeldenummer: PCT/DE2001/003615
(87) Internationale Veröffentlichungsnummer: WO 2002/035810

(56) Entgegenhaltungen:
- EP-A- 0 924 793
- EP-A- 1 184 936
- WO-A-00/38475
- FR-A- 2 783 652
- US-A- 5 952 975

## Beschreibung

Die Erfindung betrifft ein Kommunikationsendgerät mit einem Antennenelement, welches ein definiertes Antennenvolumen aufweist, und mit einer akustischen Ausgabeeinrichtung gemäß dem Oberbegriff des Patentanspruches 1

Bei der Entwicklung moderner Kommunikationsendgeräte, insbesondere mobiler Hand-held-Geräte wie Mobilfunkgeräte oder Palmtops bzw. PDAs (Personal Digital Assistants) mit entsprechenden Mobilfunk-Funktionen, ist zunehmend auf möglichst geringe Gesamtabmessungen des Geräts zu achten. Gleichzeitig soll das Gerät mit immer besserer Qualität immer mehr Möglichkeiten bieten. Hierbei soll unter anderem die Qualität der Wiedergabe der gesendeten Signale optimiert werden. Neben der Verbesserung des Mikrofons des sendenden Kommunikation- ' endgeräts ist hierfür eine möglichst gute Übertragungsqualität des Signals über die Luftschnittstelle und eine qualitativ gute akustische Ausgabeeinrichtung im empfangenden Gerät erforderlich.

Eine maßgebliche Komponente für die Übertragungsqualität der Signale über das Funknetz sind die vom Gerät verwendeten Antennenelemente. Zum Abstrahlen und Aufnehmen von elektromagnetischer Strahlung in einem vorbestimmten Frequenzbereich definiert und benötigt ein solches Antennenelement einen bestimmten Raum, das sogenannte "Antennenvolumen", der zur Vermeidung von Beeinflussungen der Antennencharakteristika möglichst frei zu halten ist. Da die Antennenelemente bei moderneren Geräten vorzugsweise in das Gerät integriert werden, führt dies zu einem erhöhten Platzbedarf des Kommunikationsendgeräts an sich. Dabei führt die Forderung nach Kommunikationsendgeräten mit Dualband-Fähigkeit bzw. mit Multiband-Fähigkeiten zu einem noch höheren Platzbedarf für die Antennen. Bei vorgegebenen Außenabmessungen des gesamten Geräts sind daher Verbesserungen anderer Komponenten, die ebenfalls mit einem erhöhten Platzbedarf der jeweiligen Komponenten verbunden sind, in der Regel nur möglich, indem beispielsweise der Raum für die Antenne reduziert und dabei eine Verschlechterung der Antenneneigenschaften in Kauf genommen wird.

Es ist Aufgabe der vorliegenden Erfindung, ein zum Stand der Technik alternatives Mobilfunkgerät zu schaffen, das bei möglichst geringen Abmessungen eine gute Übertragungsqualität der Antenne und gleichzeitig eine gute Qualität der akustischen Ausgabe der empfangenen Signale bietet.

Diese Aufgabe wird durch ein Kommunikationsendgerät gemäß Patentanspruch 1 gelöst.

Erfindungsgemäß sind bei diesem Kommunikationsendgerät das Antennenelement und die akustische Ausgabeeinrichtung derart ausgebildet und/oder zueinander angeordnet, dass zumindest ein Teil des Antennenvolumens mindestens einen Teil eines Resonanzraums für die akustische Ausgabeeinrichtung, beispielsweise eine Hörkapsel, bildet. Durch die Erfindung wird dabei der zur Verfügung stehende Raum im Kommunikationsendgerät sehr effektiv genutzt, indem der für die Antennenfunktion benötigte Raum des Antennenvolumens gleichzeitig als Resonanzraum optimiert und ausgebildet wird. Das heißt, dieser Raum innerhalb des Kommunikationsendgeräts wird für zwei verschiedene Funktionen verwendet, ohne dass hierbei Beeinträchtigungen der einen Funktion durch die Nutzung für die andere Funktion auftreten. Für die Antennenfunktion ist ein luftgefüllter Rauminnenbereich optimal, da ein solcher luftgefüllter Bereich nur eine kleine Dielektrizitätskonstante aufweist und keinerlei HF-Verluste verursacht. Ebenso braucht die Akustik zur optimalen Funktion einen möglichst großen luftgefüllten Bereich als Resonanzraum, beispielsweise als so genanntes "RückkammerVolumen" an der Rückseite einer Hörkapsel.

Weiter ist erfindungsgemäß das Antennenelement an einer Antennenhalterung angeordnet und die Antennenhalterung umfasst eine Halterung für die akustische Ausgabeeinrichtung und Kontaktelemente zur leitenden Kontaktierung der akustischen Ausgabeeinrichtung. Dies kann zum Beispiel durch eine in der Antennenhalterung eingebrachte Ausnehmung realisiert werden, in die eine Hörkapsel eingelegt und befestigt wird.

Vorzugsweise weist die Antennenhalterung einen Hohlraum mit einer Öffnung auf, an der die akustische Ausgabeeinrichtung derart angeordnet ist, dass der Hohlraum den Resonanzraum für die akustische Ausgabeeinrichtung bildet. Bei der Öffnung kann es sich selbstverständlich auch um mehrere kleine Löcher, ein Netz o. Ä. handeln. Der Hohlraum sollte abgesehen von der an der akustischen Ausgabeeinrichtung gelegenen Öffnung bzw. den Öffnungen im wesentlichen schalldicht geschlossen sein, damit sich an der/den Öffnung(en) an der akustischen Ausgabeeinrichtung der gewünschte Schallwechseldruck aufbauen kann.

Ein solcher Aufbau kann beispielsweise dadurch erreicht werden, dass die Antennenhalterung einen Körper aus nicht leitendem, d.h. isolierendem Material, mit einem Hohlraum mit der entsprechenden Öffnung umfasst. Dieser Hohlraum bildet dann den Resonanzraum. Da der Körper aus nicht leitendem Material besteht, kann er innerhalb des Antennenvolumens liegen. Das heißt, das Antennenelement kann beispielsweise außen auf dem Körper aufgebracht sein. Vorzugsweise handelt es sich hierbei um eine oder mehrere, beispielsweise zwei, jeweils auf eine Oberfläche der Antennenhalterung aufgebrachte leitende Flächen.

Bei einem weiteren bevorzugten Ausführungsbeispiel enthält die Antennenhalterung auch eine oder mehrere integrierte Schirmkammern, um bestimmte Bereiche innerhalb des Kommunikationsendgeräts, beispielsweise EMV-empfindliche Bereiche auf einer Platine, gegenüber der von der Antenne abgestrahlten HF-Strahlung abzuschirmen. Diese Schirmkammern können durch Ausnehmungen in der Oberfläche des die Antennenhalterung bildenden Körpers gebildet werden, die innenseitig leitfähig beschichtet sind, wobei die Antennenhalterung an der passenden Stelle auf der Platine positioniert werden muß, so dass der zu schirmende Bereich auf der Platine von der Ausnehmung überdeckt wird.

Für einen möglichst effizienten Einbau einer solchen Antennenhalterung mit dem Antennenelement und der akustischen Ausgabeeinrichtung weist die Antennenhalterung vorzugsweise auch Kontaktelemente zur leitenden Kontaktierung des Antennenelements und/oder der akustischen Ausgabeeinrichtung und/oder der Schirmkammer auf. Die Antennenhalterung mit den aufgebrachten Antennenelementen der bereits eingebauten akustischen Ausgabeeinrichtung bzw. Hörkapsel sowie der fertigen Schirmkammer mit den zugehörigen Kontaktelementen kann als vorgefertigtes Modul bei der Endmontage des Kommunikationsendgeräts an der gewünschten Stelle einfach auf die Platine aufgelegt werden. Durch eine elastische Ausbildung der Kontaktelemente zur Platine, zur Bildung von Druckkontakten, können weitere zusätzliche Arbeitsgänge wie eine Verlötung der Kontakte vermieden werden.

Die Erfindung wird im Folgenden unter Hinweis auf die beigefügten Zeichnungen anhand eines Ausführungsbeispiels näher erläutert. Die im Folgenden dargestellten sowie die bereits oben genannten Merkmale können nicht nur in den genannten Kombinationen, sondern auch einzeln oder in anderen Kombinationen erfindungswesentlich sein. Es stellen dar:
Figur 1 eine perspektivische Ansicht auf ein Antennenmodul, welches im wesentlichen aus einer Antennenhalterung mit einem aufgebrachten Antennenelement besteht, zum Einbau in ein erfindungsgemäßes Kommunikationsendgerät,
Figur 2 einen zentralen Längsschnitt durch das Antennenmodul gemäß Figur 1,
Figur 3 einen Querschnitt durch die Antennenhalterung des Antennenmoduls in Figur 2 entlang der Schnittlinie A-A',

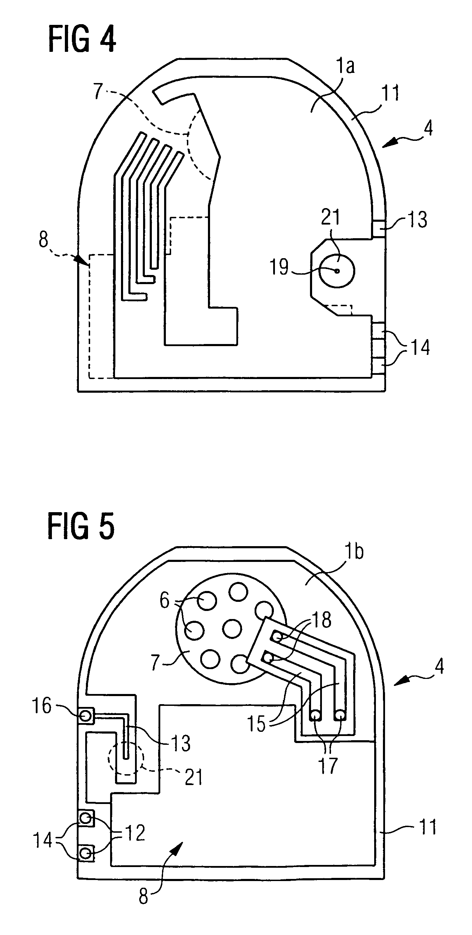

Figur 4 eine Draufsicht auf das Antennenmodul gemäß Figur 1,
Figur 5 eine Unteransicht eines Antennenmoduls gemäß Figur 1.

In den Figuren ist ein Antennenmodul für ein erfindungsgemäßes Kommunikationsendgerät, hier speziell ein Mobilfunkgerät, dargestellt. Dieses Modul weist eine im wesentlichen aus einem nichtleitenden Kunststoffkörper 11 bestehende Antennenhalterung 4 auf. Diese Antennenhalterung 4 ist auf zwei gegenüberliegenden Oberflächen mit speziell strukturierten leitenden Flächen 1a, 1b beschichtet, die ein zweigeteiltes Antennenelement 1 bilden. Zwischen den leitenden Flächen 1a, 1b wird das Antennenvolumen aufgespannt. Dieses Antennenmodul wird in entsprechendem Kontakt mit einer Leiterplatte 20 des Mobilfunkgeräts an der vorgesehenen Stelle in das Mobilfunkgerät eingelegt.

Der Aufbau und die Form des Antennenmoduls sind im Detail wie folgt:
Der die Antennenhalterung 4 bildende Kunststoffkörper 11 besteht aus zwei zusammengefügten Halbschalen, wodurch im inneren des Kunststoffkörpers 11 einen Hohlraum 5 gebildet wird. Der Resonanzraum 3 sollte für eine gute Klangqualität ein Minimalvolumen aufweisen. Der Hohlraum 5 wird daher möglichst groß gewählt, wobei darauf geachtet wird, dass die verbleibende Wandstärke des Kunststoffkörpers 11 eine ausreichende Stabilität gewährleistet. Von der äußeren Form ist der Kunststoffkörper 11 an die Gehäuseform bzw. den zur Verfügung stehenden Platz im Mobilfunkgerät sowie an die gewünschte dreidimensionale Form des Antennenelements 1 bzw. des Antennenvolumens 2 angepasst.

Dementsprechend weist der Kunststoffkörper 11 eine im wesentlichen ebene Seite auf, die im Folgenden auch als Vorderseite bezeichnet wird. In der Vorderseite befindet sich eine Ausnehmung 7, in die bei der Montage eine Hörkapsel (nicht dargestellt) eingelegt wird. Zwischen der Ausnehmung 7 für die Hörkapsel und dem Hohlraum 5 befinden sich mehrere Öffnungen 6, so dass der Hohlraum 5 für die entsprechend ausgebildete, in die Ausnehmung 7 eingebrachte Hörkapsel einen Resonanzraum 3, genauer gesagt ein Rückkammervolumen, bildet.

Neben der Ausnehmung 7 befindet sich auf der Vorderseite des Kunststoffkörpers 11 eine weitere Ausnehmung, die eine in die Antennenhalterung 4 integrierte Schirmkammer 8 bildet. Innerhalb dieser Schirmkammer 8 können besonders zu schützende, HF-empfindliche, elektronische Bauteile, zum Beispiel eine Steuerung für ein Display, des Mobilfunkgeräts untergebracht sein. Ebenso können in der Schutzkammer Bauteile untergebracht werden, die aufgrund ihrer Störfähigkeit geschirmt werden müssen, wie z.B. eine Endstufe der Sendeeinrichtung, die unerwünschte Oberwellen aussendet.

Auf der der Vorderseite gegenüberliegenden Rückseite ist der Körper 11 von seiner Form her an die Form des Gehäuses des Mobilfunkgeräts angepasst. Im vorliegenden Ausführungsbeispiel handelt es sich um ein Modul für ein Mobilfunkgerät mit einem rückseitig und oben abgerundeten Gehäuse. Dementsprechend ist auch die Rückeite mit einer entsprechenden Krümmung konvex ausgeformt.

Das Antennenelement 1 selbst besteht aus zwei auf die Vorerseite und auf die Rückseite aufgebrachten leitenden Flächen 1a, 1b. Diese Flächen weisen die für die Antennenfunktion gewünschte Struktur auf. Die genaue Form bzw. Struktur der Antenne ist dabei für die Erfindung beliebig und hängt von den Frequenzbereichen ab, in denen die Antenne arbeiten soll. Im vorliegenden Ausführungsbeispiel handelt es sich um eine sogenannte "PIF"-Antenne (Planar Inverted F). Auf der Vorderseite des Körpers 11 verläuft die leitende Fläche 1b des Antennenelements auch durchgehend auf den Innenseiten 10 innerhalb der Ausnehmungen 7, 9 für die Hörkapsel und die Schirmkammer 8. Das heißt, diese leitende Fläche 1b dient als ein Teil des Antennenelements 1 und bildet gleichzeitig die Abschirmung für die Hörkapsel und die Schirmkammer 8.

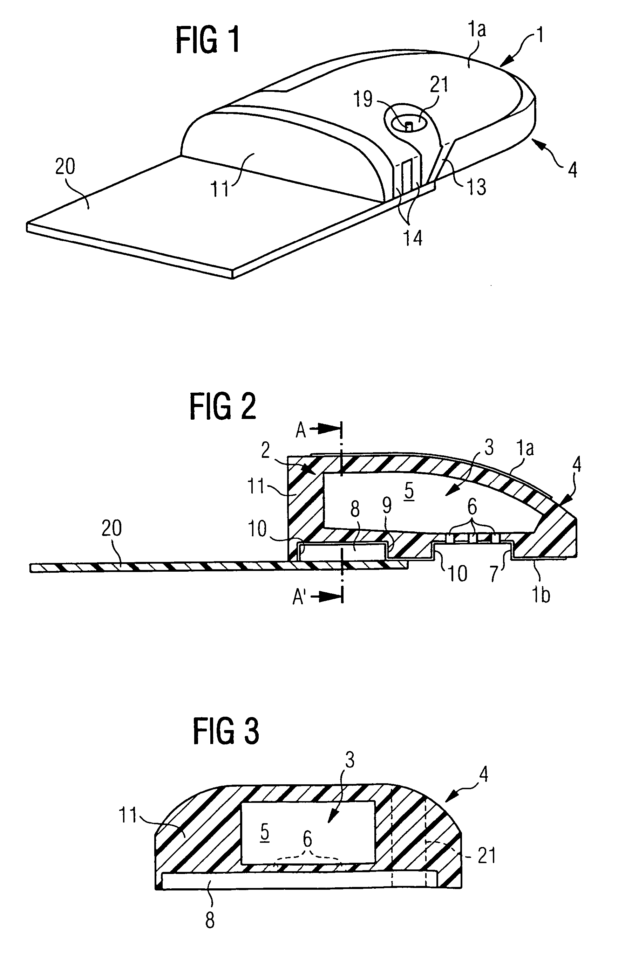

Das gesamte Modul wird dann, wie in Figur 2 dargestellt, mit einem Teil der Vorderseite auf eine Platine 20 des Mobilfunkgeräts aufgelegt, so dass sich die Schirmkammer 8 direkt über der Platine 20 befindet und die Ausnehmung 7 für die Hörkapsel oberhalb des oberen Endes der Platine 20 innerhalb des Gehäuses des Mobilfunkgeräts liegt. Auf der Platine 20 befinden sich Kontaktflächen, die beim Auflegen des Moduls auf die Platine 20 in Kontakt mit der auf der Vorderseite befindlichen leitenden Fläche 1b des Antennenelements 1 treten. Diese auf der Vorderseite befindliche leitende Fläche 1b des Antennenelements 1 wird damit auf das Massepotential des Mobilfunkgeräts gelegt.

Vorzugsweise sind auf der leitenden Fläche 1b elastische Kontakte angeordnet, die für einen sicheren Druckkontakt mit den Kontaktflächen auf der Leiterplatte 20 sorgen. Bei dem dargestellten Ausführungsbeispiel handelt es sich um mehrere Kontaktpunkte entlang der Randkante der Schirmkammer 8, die relativ eng nebeneinanderliegen und so für eine HF-sichere Abschirmung der Kammer 8 sorgen. Zur Bildung der elastischen Kontaktpunkte können beispielsweise Metallfedern oder auch punktförmig aufgebrachte Tropfen von leitfähigem Silikon verwendet werden. Anstelle der punktförmigen Kontakte entlang der Randkante der Schirmkammer kann selbstverständlich auch ein durchgehender Strang von leitfähigem Silikon o.Ä. aufgebracht werden.

Im dargestellten Ausführungsbeispiel ist die Struktur der auf der Vorderseite des Moduls befindlichen leitenden Fläche 1b so gewählt, dass innerhalb dieser Fläche 1b auch Leitungsstrukturen 15 mit entsprechenden Kontaktpunkten 17, 18 für die Kontaktierung der Hörkapsel im Modul integriert sind. Auch bei diesen Strukturen 15 kann es sich um elastische Metallfedern handeln oder um aufgedruckte Strukturen, die an den Kontaktpunkten 17, 18 beispielsweise jeweils mit einem elastischen leitfähigen Silikon o.Ä. versehen sind.

Auf die an der Rückseite des Kunststoffkörpers 11 aufgebrachte leitfähige Fläche 1a des Antennenelements 1 wird im Betrieb das HF-Signal angelegt. Dies geschieht über mindestens einen, vorzugsweise mehrere Kontaktstreifen 13, 14 (im vorliegenden Fall drei), die seitlich von der Rückseite des Kunststoffkörpers 11 auf die Vorderseite des Kunststoffkörpers 11 an einer Kante herumgreifen und dort mit elastischen Kontaktpunkten 12, 16 versehen sind, die im montierten Zustand auf entsprechende Kontaktelemente auf der Platine 20 drücken.

In dem Kunststoffkörper 11 befindet sich außerdem eine von der Rückseite zur Vorderseite durchgehende Bohrung 21 zur Aufnahme eines Koaxialsteckers zum Anschluss einer externen Antenne. Diese Bohrung 21 verläuft neben dem Hohlraum 5 und der Schirmkammer 8, d.h. sie beeinflusst weder den Resonanzraum 3 noch die Schirmkammer 8. Die Antennenhalterung 4 bietet somit zusätzlich eine stabile Halterung für den Koaxialstecker einer externen Antenne, beispielsweise der Antenne einer KFZ-Freisprecheinrichtung. Der Innenleiter 19 dieses Koaxialsteckers ist über einen Kontaktstreifen 13 und entsprechende Kontaktpunkte 16 mit der leitenden Fläche 1a auf der Rückseite des Kunststoffkörpers 11 und der Platine 20 verbunden, so dass auch hier das HF-Signal anliegt. Der Außenleiter, d.h. die Schirmung des HF-Steckers, ist entsprechend mit dem Massepotential, d.h. der leitenden Fläche 1b auf der Vorderseite des Kunststoffkörpers 11 verbunden.

Das Einbringen der Strukturen 13, 14, 15 für die Kontakte, der Bohrung 21 für den Koaxialstecker sowie der Öffnungen 6 in die leitenden Fläche 1a, 1b führt in der Regel nicht zu einer Beeinträchtigung der Antennenfunktion, da diese Strukturen 13, 14, 15, Bohrung 21 und Öffnungen 6 entweder relativ klein im Verhältnis zur Gesamtfläche sind oder beim Entwurf der Antennenkonstruktion berücksichtigt werden können.

Die Erfindung bietet eine optimale Ausnutzung des im Mobilfunkgerät zur Verfügung stehenden Raums. Das benötigte Antennenvolumen 2 wird vorteilhaft für die Verbesserung der Akustik genutzt. Zusätzlich bietet die Antennenhalterung eine Schirmfunktion für bestimmte Bereiche auf einer Platine 20 des Mobilfunkgeräts sowie eine Haltefunktion für eine Hörkapsel bzw. einen Lautsprecher. Dadurch kann eine separate Halterung für die Hörkapsel entfallen, was zu einer Reduzierung der Kosten führt. Außerdem wird eine sichere und einfache Kontaktierung der Antenne, der Schirmung und der Hörkapsel gewährleistet. Durch die Verwendung des stabilen Kunststoffkörpers 11 für die Antennenhalterung 4, auf den das Antennenelement 1 als leitfähige Flächen 1a, 1b aufgebracht wird, werden gleichzeitig Toleranzprobleme vermieden, wie sie beim Aufbau einer Antenne ohne extra Träger auftreten. Das gesamte fertige Modul ist somit in der Herstellung relativ einfach und kostengünstig und lässt sich schnell und ohne großen Aufwand beim Zusammenbau des Mobilfunkgeräts montieren.

## Patentansprüche

1. Kommunikationsendgerät
mit einem Antennenelement (1), welches ein definiertes Antennenvolumen (2) aufweist, und
mit einer akustischen Ausgabeeinrichtung,
wobei das Antennenelement (1) und die akustische Ausgabeeinrichtung derart ausgebildet und/oder zueinander angeordnet sind, dass zumindest ein Teil des Antennenvolumens (2) mindestens einen Teil eines Resonanzraums (3) für die akustische Ausgabeeinrichtung bildet,
**dadurch gekennzeichnet,**
**dass** das Antennenelement (1) an einer Antennenhalterung (4) angeordnet ist, und
**dass** die Antennenhalterung (4) eine Halterung für die akustische Ausgabeeinrichtung und Kontaktelemente (13, 14, 15) zur leitenden Kontaktierung der akustischen Ausgabeeinrichtung(8) umfasst.

2. Kommunikationsendgerät nach Anspruch 1, **dadurch gekennzeichnet, dass** die Antennenhalterung (4) einen Hohlraum (5) mit einer Öffnung (6) aufweist, an der die akustische Ausgabeeinrichtung derart angeordnet ist, dass der Hohlraum (5) den Resonanzraum (3) für die akustische Ausgabeeinrichtung bildet.

3. Kommunikationsendgerät nach einem der vorstehenden Ansprüche, **dadurch gekennzeichnet, dass** die Antennenhalterung (4) eine Schirmkammer (8) umfasst.

4. Kommunikationsendgerät nach einem der vorstehenden Ansprüche, **dadurch gekennzeichnet, dass** die Antennenhalterung (4) Kontaktelemente (13, 14, 15) zur leitenden Kontaktierung des Antennenelements (1) und/oder der Schirmkammer (8) umfasst.

5. Kommunikationsendgerät nach einem der vorstehenden Ansprüche, **dadurch gekennzeichnet, dass** die Antennenhalterung (4) einen Körper (11) aus nichtleitendem Material mit mindestens einem Hohlraum (5) und/oder einer Ausnehmung (7, 8) umfasst.

6. Kommunikationsendgerät nach einem der vorstehenden Ansprüche, **dadurch gekennzeichnet, dass** die Antennenhalterung aus zwei Halbschalen besteht.

7. Kommunikationsendgerät nach einem der vorstehenden Ansprüche, **dadurch gekennzeichnet, dass** das Antennenelement (1) eine oder mehrere jeweils auf eine Oberfläche der Antennenhalterung (4) aufgebrachte leitfähige Flächen (1a, 1b) umfasst.

8. Kommunikationsendgerät nach einem der vorstehenden Ansprüche, **dadurch gekennzeichnet, dass** die Schirmkammer (8) von einer innenseitig leitfähig beschichteten Ausnehmung (9) in der Antennenhalterung (4) gebildet wird.

9. Kommunikationsendgerät nach einem der vorstehenden Ansprüche, **dadurch gekennzeichnet, dass** die Antennenhalterung (4) aussenseitig vor der Öffnung (6) des Hohlraums (5) eine Ausnehmung (7) zur Aufnahme einer Hörkapsel aufweist.

10. Kommunikationsendgerät nach einem der vorstehenden Ansprüche, **dadurch gekennzeichnet, dass** das Kommunikationsendgerät ein Mobilfunkgerät ist.

## Claims

1. A communications terminal device comprising
an antenna element (1) having a defined antenna volume (2), and
an acoustic output device,
wherein the antenna element (1) and the acoustic output device are configured and/or arranged to each other such that at least a part of the antenna volume (2) forms at least a part of a resonance space (3) for the acoustic output device,
**characterised in that**
the antenna element (1) is arranged at an antenna support (4), and that the antenna support (4) comprises a support for the acoustic output device and contact elements (13, 14, 15) for conductively contacting the acoustic output device (8).

2. The communications terminal device according to claim 1,
**characterised in that** the antenna support (4) has a hollow space (5) with an aperture (6), where the acoustic output device is arranged such that the hollow space (5) forms the resonance space (3) for the acoustic output device.

3. The communications terminal device according to one of the preceding claims **characterised in that** the antenna support (4) comprises a shielding compartment (8).

4. The communications terminal device according to one of the preceding claims **characterised in that** the antenna support (4) comprises contact elements (13, 14, 15) for conductively contacting the antenna element (1) and/or the shielding compartment (8).

5. The communications terminal device according to one of the preceding claims **characterised in that** the antenna support (4) comprises a body (11) made of nonconductive material having at least one hollow space (5) and/or one recess (7, 8).

6. The communications terminal device according to one of the preceding claims **characterised in that** the antenna support consists of two half-shells.

7. The communications terminal device according to one of the preceding claims **characterised in that** the antenna element (1) comprises one or more conductive faces (1 a, 1b) respectively applied to a surface of the antenna support (4).

8. The communications terminal device according to one of the preceding claims **characterised in that** the shielding compartment (8) is formed by a recess (9) conductively coated on the inside in the antenna support (4).

9. The communications terminal device according to one of the preceding claims **characterised in that** the antenna support (4) has a recess (7) on its outside in front of the aperture (6) of the hollow space (5) for taking up an earphone.

10. The communications terminal device according to one of the preceding claims **characterised in that** the communications terminal device is a mobile radio device.

## Revendications

1. Terminal de communication
avec un élément d'antenne (1) comportant un volume d'antenne (2) défini, et avec un dispositif de sortie acoustique,
l'élément d'antenne (1) et le dispositif de sortie acoustique étant adaptés et/ou agencés l'un par rapport à l'autre de sorte qu'au moins une partie du volume d'antenne (2) forme au moins une partie de l'espace de résonance (3) pour le dispositif de sortie acoustique,
**caractérisé en ce que**
l'élément d'antenne (1) est agencé à un support d'antenne (4) et que le support d'antenne (4) comprend un support pour le dispositif de sortie acoustique et des éléments de contact (13, 14, 15) pour la mise en contact conducteur du dispositif de sortie (8) acoustique.

2. Terminal de communication selon la revendication 1
**caractérisé en ce que** le support d'antenne (4) comprend une cavité (5) avec un orifice (6) auquel est agencé le dispositif de sorte que la cavité (5) forme l'espace de résonance (3) pour le dispositif de sortie acoustique.

3. Terminal de communication selon l'une des revendications précédentes **caractérisé en ce que** le support d'antenne (4) comprend une chambre blindée (8).

4. Terminal de communication selon l'une des revendications précédentes **caractérisé en ce que** le support d'antenne (4) comprend des éléments de contact (13, 14, 15) pour la mise en contact conducteur de l'élément d'antenne (1) et/ou de la chambre blindée (8).

5. Terminal de communication selon l'une des revendications précédentes **caractérisé en ce que** le support d'antenne (4) comprend un corps (11) d'un matériel non-conducteur avec au moins une cavité (5) et/ou un évidement (7, 8).

6. Terminal de communication selon l'une des revendications précédentes **caractérisé en ce que** le support d'antenne consiste en deux demi-coques.

7. Terminal de communication selon l'une des revendications précédentes **caractérisé en ce que** l'élément d'antenne (1) comprend une ou plusieurs surfaces conductrices (1a, 1b) appliquées respectivement sur une surface du support d'antenne (4).

8. Terminal de communication selon l'une des revendications précédentes **caractérisé en ce que** la chambre blindée (8) est formée par un évidement (9) revêtu au côté intérieur dans le support d'antenne (4).

9. Terminal de communication selon l'une des revendications précédentes **caractérisé en ce que** le support d'antenne (4) comporte au côté extérieur devant l'ouverture (6) de la cavité (5) un évidement (7) pour la réception d'un écouteur.

10. Terminal de communication selon l'une des revendications précédentes **caractérisé en ce que** le terminal de communication est un dispositif de radiocommunication mobile.
